# FASCICULE DE BREVET EUROPEEN

(11) **EP 3 329 185 B1**
(45) Date de publication et mention de la délivrance du brevet: **12.06.2019**
(21) Numéro de dépôt: 16763890.7
(22) Date de dépôt: 28.07.2016
(51) Int. Cl.: A47J 37/06, F24B 1/20, F24B 1/22

(54) **DISPOSITIF DE FOUR A BOIS D'EXTERIEUR**
HOLZOFEN ZUR VERWENDUNG IM FREIEN
OUTDOOR WOOD STOVE DEVICE

(30) Priorité: 31.07.2015 FR 1557427
(43) Date de publication de la demande: 06.06.2018
(73) Titulaire: Fortitudo, 7396 AK Terwolde (NL); Fonderie de Niederbronn, 67110 Niederbronn Les Bains (FR)
(72) Inventeur: REYDEL, Nicolas, 77694 Kehl (DE)
(74) Mandataire: Cabinet Bleger-Rhein-Poupon
(86) Numéro de dépôt international: PCT/FR2016/051972
(87) Numéro de publication internationale: WO 2017/021630

(56) Documents cités:
- WO-A2-2007/103524
- US-A- 2 608 190
- US-A- 2 763 200
- US-A- 3 032 027
- US-A1- 2013 206 016
- US-B1- 8 061 348

## Description

La présente invention a pour objet un dispositif de four à bois d'extérieur.

On connaît déjà des dispositifs de four à bois d'extérieur, destinés essentiellement à être utilisés à titre privé, sur une terrasse ou dans un jardin par exemple, pour la cuisson de mets tels que, non limitativement, des pizzas ou similaires.

Ces dispositifs de four comportent tous une enceinte fermée par au moins une porte, divisée en au moins deux compartiments superposés, à savoir un compartiment supérieur de cuisson et un compartiment inférieur pour le foyer, entre lesquels est disposée un fond pour y poser les mets à cuire, de préférence une pierre de cuisson.

De manière habituelle, l'enceinte est disposée fixement sur une base permettant qu'elle soit à une hauteur offrant un confort d'utilisation, et qui comprend des pieds et souvent des moyens de roulement pour faciliter la mobilité.

Les dispositifs de four à bois d'extérieur existants sont pour la plupart limités à une seule utilisation à savoir la cuisson au four. On connaît cependant des dispositifs de four à bois d'extérieur, conçus de manière modulaire en sorte qu'un module comportant le compartiment de cuisson puisse être déposé, tandis que le module comportant le compartiment de combustion peut être utilisé de manière indépendante comme barbecue.

Cela génère toutefois des inconvénients du point de vue de l'optimisation du tirage, et du réglage de la température lorsque le dispositif est en configuration four. En effet, s'il n'y a pas une certaine étanchéité entre les deux modules, les fuites perturbent le tirage, le réglage de température est difficile et la cuisson ne peut pas être optimale. Pour pallier cet inconvénient le bord supérieur du module inférieur doit de préférence être entièrement enveloppé par le bord inférieur du module supérieur.

Ces dispositifs présentent des inconvénients, notamment en ce qu'il est plus facile de les utiliser successivement comme barbecue puis comme four, que l'inverse, puisque l'adaptation du module supérieur froid sur le module inférieur chaud est plus aisée et moins risquée que la dépose du module supérieur chaud.

Les documents US 2763200 A et US 2608190 A divulguent de tels dispositifs.

La présente invention a pour but de proposer un dispositif de four à bois d'extérieur, susceptible d'être utilisé également comme barbecue, mais qui ne présente pas les inconvénients précités.

Le dispositif de four à bois d'extérieur selon l'invention est du type comprenant au moins au moins deux compartiments superposés, à savoir un compartiment supérieur de cuisson fermé par une porte et un compartiment inférieur pour le foyer au-dessus duquel est ouvert ledit compartiment supérieur, et conçu en au moins deux modules superposés et dissociables, l'un, supérieur, comportant le compartiment cuisson, et l'autre, inférieur, comportant le compartiment destiné à contenir le foyer, et il se caractérise en ce que le module supérieur repose sur le sol indépendamment du module inférieur, ce dernier reposant également sur le sol, et en ce qu'il comporte des moyens actionnables, conçus aptes à déplacer dans le sens vertical l'un au moins desdits deux modules, en sorte de réaliser, selon le sens du déplacement, l'ajustement de la réunion desdits modules ou leur écartement, en sorte de permettre, respectivement, l'aboutement étanche desdits modules ou leur dissociation.

Selon une caractéristique additionnelle du dispositif de four selon l'invention, l'un au moins des modules est équipé de moyens de roulement pour permettre son éloignement de l'autre module.

Selon un mode de réalisation particulier du dispositif de four selon l'invention, le module inférieur comporte des moyens aptes à le déplacer verticalement.

Selon un second mode de réalisation particulier du dispositif de four selon l'invention, le compartiment cuisson du module supérieur est conçu apte à être soulevé par rapport à sa partie qui repose au sol.

Selon une caractéristique additionnelle du second mode de réalisation particulier du dispositif de four selon l'invention, le compartiment cuisson est conçu apte à pivoter selon un axe horizontal situé à sa base du côté opposé à celui comportant la porte, tandis que sa partie qui repose au sol est équipée d'un moyen de soulèvement apte à réaliser la mise en pivotement.

Selon une autre caractéristique additionnelle du dispositif de four selon l'invention, le moyen de soulèvement consiste en un système à came, manoeuvrable par un levier.

Les avantages et les caractéristiques du dispositif de four selon l'invention, ressortiront plus clairement de la description qui suit et qui se rapporte au dessin annexé, lequel en représente un mode de réalisation non limitatif.

Dans le dessin annexé :
- la figure 1 représente une vue en perspective du dispositif de four à bois d'extérieur selon l'invention,
- la figure 2 représente une vue en perspective du même dispositif dans une configuration d'utilisation différente.
- les figures 3a, 3b et 3c représentent des vues en élévation et de côté de la même partie du même dispositif dans des phases différentes de mise en oeuvre.
- la figure 4 représente une vue partielle en perspective d'une partie du même dispositif,

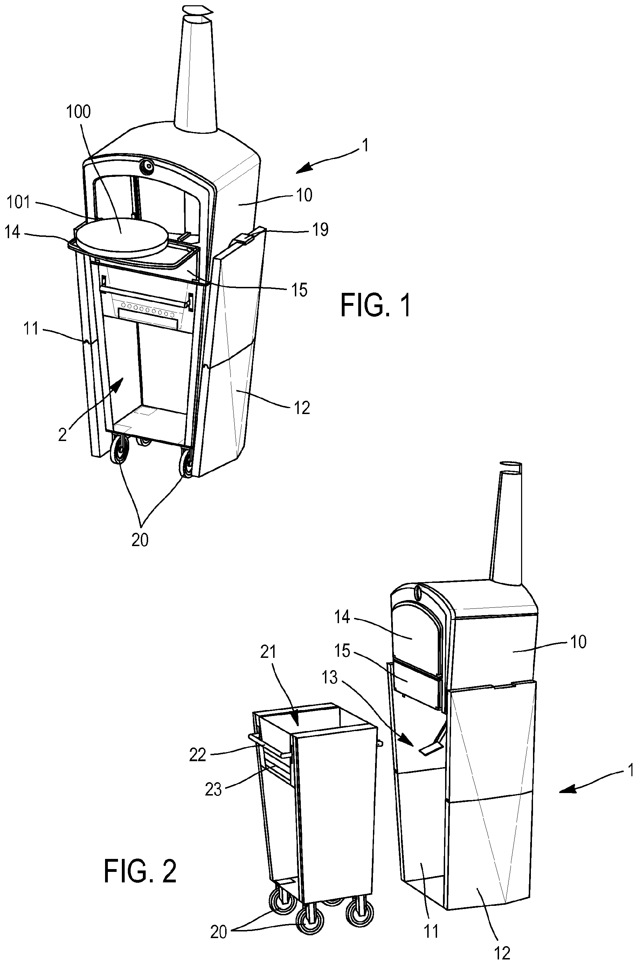

En référence aux figures 1 et 2, on peut voir un dispositif de four à bois d'extérieur selon l'invention.

Ce dispositif de four comprend deux modules à savoir un module supérieur 1 dédié à la cuisson et un module inférieur 2 dédié au foyer.

Le module inférieur 2 se présente sous la forme d'un caisson monté sur des moyens de roulement 20 et comportant dans sa partie supérieur un réceptacle 21 destiné à la combustion du bois, ouvert supérieurement et muni en face avant d'une poignée 22 de manoeuvrement et des moyens 23 de réglage du tirage.

Le module supérieur 1 comporte une enceinte 10 destinée à la cuisson, reposant sur deux parois verticales et latérales 11 et 12 qui délimitent un espace 13 destiné à loger le module inférieur 2.

L'enceinte 10 de cuisson comporte en face avant, supérieurement une porte 14 permettant d'accéder à l'intérieur, et inférieurement un volet 15 de chargement du réceptacle 21 en bois.

L'enceinte 10, qui est ouverte inférieurement sur le réceptacle 21, renferme un plateau 100, en fait une pierre réfractaire, qui est avantageusement montée sur un bras mobile 101, lequel permet d'extraire le plateau 100 hors de l'enceinte 10 pour déposer ou prendre la pizza ou autre aliment, le plateau 100 étant de plus monté pivotant afin de pouvoir le faire tourner et obtenir une cuisson homogène.

On notera par ailleurs que le plateau 100 n'occupe pas toute la largeur et profondeur de l'enceinte 10 de manière permettre des remontées de flammes sur toute la périphérie.

On notera que bien entendu le module supérieur 1 pourrait également être muni de moyens de roulement et que dans ce cas le module inférieur 2 pourrait en être dépourvu.

Lorsque les deux modules 1 et 2 sont associés, cela permet de cuire dans l'enceinte 10 des pizzas ou autres aliments. Le module inférieur 2 peut aussi être dissocié du module supérieur 1 on obtient ainsi un barbecue ou un brasero selon l'usage que l'on veut en faire.

Comme cela a été exposé, il est important en configuration four, que l'étanchéité entre les deux modules 1 et 2 soit optimale, tout en permettant une dissociation aisée des deux modules 1 et 2.

Le dispositif de four à bois extérieur selon l'invention permet d'atteindre ce résultat, à cet effet l'un au moins des modules 1 et 2 est mobile dans le sens vertical en sorte de pouvoir s'éloigner de l'autre pour permettre un désengagement, ou s'en rapprocher pour permettre un assujettissement.

Selon le mode de réalisation représenté, le module supérieur 1 peut être soulevé pour permettre le déplacement du module inférieur 2.

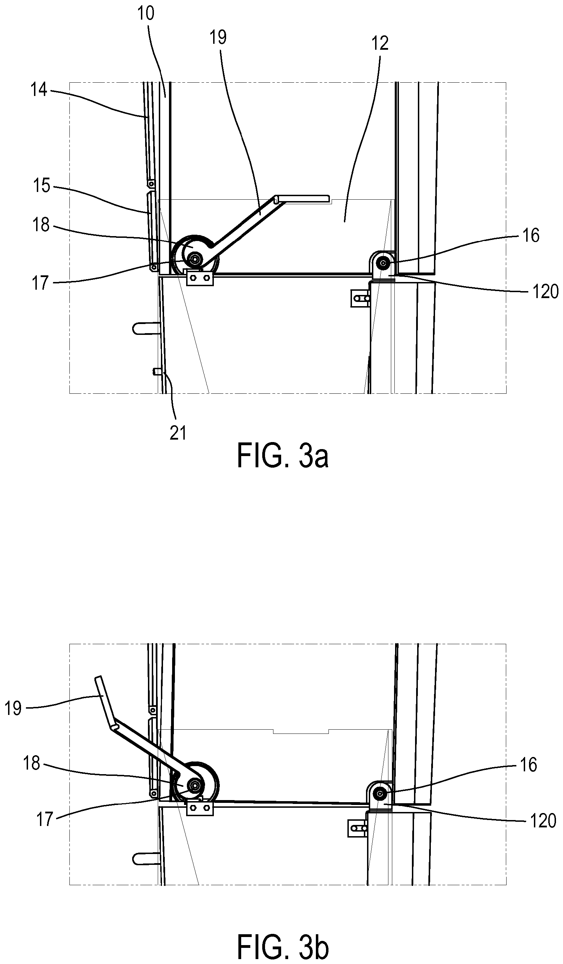

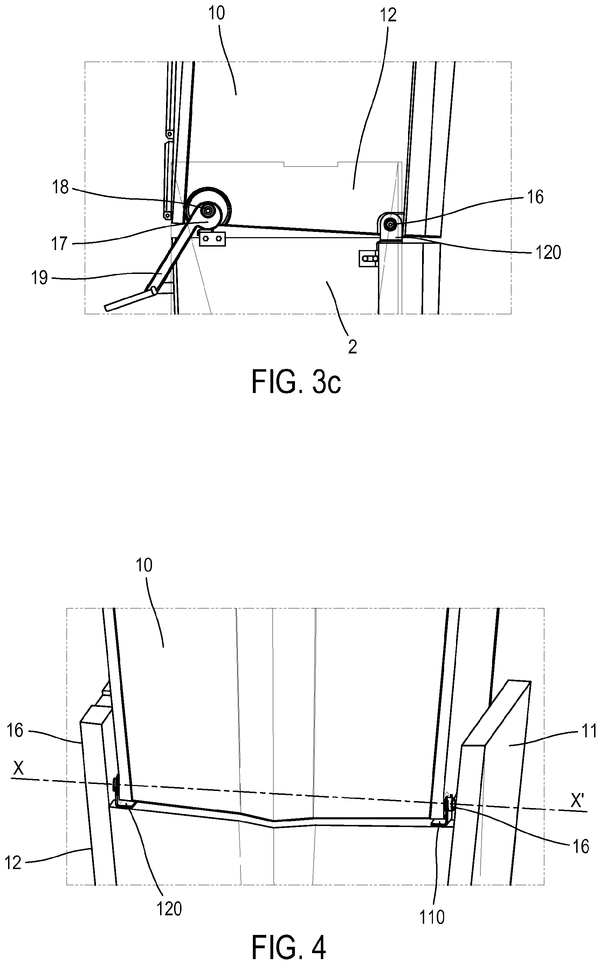

A cet effet, comme cela est visible sur les figures 3a, 3b et 3c, ainsi que sur la figure 4, l'enceinte 10 du module supérieur 1 est montée pivotante entre les parois 11 et 12 sur des paliers respectivement 110 et 120 visibles sur la figure 4, au travers de pivots 16 d'axe XX' horizontal situé inférieurement et à l'arrière c'est-à-dire du côté opposé à celui comportant la porte 14.

Par ailleurs, l'une des deux parois latérales de l'enceinte 10 comporte inférieurement, à proximité du côté comportant la porte 14, extérieurement et derrière la paroi 12, un pivot 17 d'axe parallèle à l'axe XX', sur lequel est montée pivotante une came 18 manoeuvrable au travers d'un levier 19, et qui prend appui sur un rebord interne 120 de la paroi 12.

On comprendra, comme cela ressort des figures 3a, 3b et 3c qui montrent les deux phases extrêmes et une phase intermédiaire du manoeuvrement du levier 19, que la came 18 permet de soulever l'enceinte 10 qui pivote alors sur les pivots 16.

Le déplacement vertical de l'enceinte 10 permet de désengager ou d'engager le module inférieur 2, tout en assurant une excellente étanchéité entre l'enceinte 10 et le réceptacle 21 lorsqu'ils sont superposés.

On notera que selon un autre mode de réalisation, non représenté, l'enceinte 10 est solidaire fixement du module supérieur 1, tandis que le module inférieur 2 comporte des moyens permettant de le déplacer verticalement lorsqu'il est disposé dans l'espace 13. Cela peut être réalisé, non limitativement, à la base du module 2 ou bien au niveau du réceptacle 21.

## Revendications

1. Dispositif de four à bois d'extérieur du type comprenant au moins au moins deux compartiments superposés (10, 21), à savoir un compartiment supérieur de cuisson (10) fermé par une porte (14) et un compartiment inférieur (21) pour le foyer au-dessus duquel est ouvert ledit compartiment supérieur (10), et conçu en au moins deux modules (1, 2) superposés et dissociables, l'un (1), supérieur, comportant le compartiment cuisson (10), et l'autre (2), inférieur, comportant le compartiment (21) destiné à contenir le foyer, **caractérisé en ce que** le module supérieur (1) repose sur le sol indépendamment du module inférieur (2), ce dernier reposant également sur le sol, et **en ce qu'**il comporte des moyens actionnables (18), conçus aptes à déplacer dans le sens vertical l'un au moins desdits deux modules (1, 2), en sorte de réaliser, selon le sens du déplacement, l'ajustement de la réunion desdits modules (1, 2) ou leur écartement, en sorte de permettre, respectivement, l'aboutement étanche desdits modules (1, 2) ou leur dissociation.

2. Dispositif de four selon la revendication 1, **caractérisé en ce que** l'un au moins des modules (1, 2) est équipé de moyens de roulement (20) pour permettre son éloignement de l'autre module.

3. Dispositif de four selon la revendication 1 ou la revendication 2, **caractérisé en ce que** le module inférieur (2) comporte des moyens aptes à le déplacer verticalement.

4. Dispositif de four selon la revendication 1 ou la revendication 2, **caractérisé en ce que** le compartiment cuisson (10) du module supérieur (1) est conçu apte à être soulevé par rapport à sa partie (11, 12) qui repose au sol.

5. Dispositif de four selon la revendication 4, **caractérisé en ce que** le compartiment cuisson (10) est conçu apte à pivoter selon un axe horizontal (XX') situé à sa base du côté opposé à celui comportant la porte (14), tandis que sa partie (11, 12) qui repose au sol est équipée d'un moyen de soulèvement (18) apte à réaliser la mise en pivotement.

6. Dispositif de four selon la revendication 5 le moyen de soulèvement consiste en un système à came (18), manoeuvrable par un levier (19).

## Patentansprüche

1. Holzofenvorrichtung zur Verwendung im Freien des Typs, umfassend mindestens mindestens zwei übereinanderliegende Fächer (10, 21), nämlich ein von einer Tür (14) verschlossenes oberes Garfach (10) und ein unteres Fach (21) für die Feuerstelle, über der das obere Fach offen (10) ist, und aus mindestens zwei übereinanderliegenden und trennbaren Modulen (1, 2) gestaltet, wobei das eine (1) obere, das Garfach (10) aufweist, und das andere (2) untere, das Fach (21) aufweist, das bestimmt ist, die Feuerstelle zu enthalten, **dadurch gekennzeichnet, dass** das obere Modul (1) unabhängig von dem unteren Modul (2) auf dem Boden ruht, wobei dieses ebenfalls auf dem Boden ruht, und dass sie betätigbare Mittel (18) aufweist, die imstande gestaltet sind, um mindestens eines der zwei Module (1, 2) in vertikaler Richtung derart zu verlagern, dass in Verlagerungsrichtung die Anpassung der Vereinigung der Module (1, 2) oder ihre Beabstandung derart erfolgt, das jeweils die dichte Verbindung der Module (1, 2) oder ihre Trennung erlaubt ist.

2. Ofenvorrichtung nach Anspruch 1, **dadurch gekennzeichnet, dass** mindestens eines der Module (1, 2) mit Rollmitteln (20) ausgestattet ist, um seine Entfernung von dem anderen Modul zu erlauben.

3. Ofenvorrichtung nach Anspruch 1 oder Anspruch 2, **dadurch gekennzeichnet, dass** das untere Modul (2) Mittel aufweist, die imstande sind, es vertikal zu verlagern.

4. Ofenvorrichtung nach Anspruch 1 oder Anspruch 2, **dadurch gekennzeichnet, dass** das Garfach (10) des oberen Moduls (1) imstande gestaltet ist, in Bezug auf seinen Teil (11, 12), der auf dem Boden ruht, angehoben zu werden.

5. Ofenvorrichtung nach Anspruch 4, **dadurch gekennzeichnet, dass** das Garfach (10) imstande gestaltet ist, gemäß einer horizontalen Achse (XX') zu schwenken, die sich an seiner Basis auf der Seite gegenüber der befindet, welche die Tür (14) aufweist, wogegen sein Teil (11, 12), der auf dem Boden ruht, mit einem Hubmittel (18) ausgestattet ist, das imstande ist, das Schwenken durchzuführen.

6. Ofenvorrichtung nach Anspruch 5, wobei das Hubmittel aus einem Nockensystem (18) besteht, das mit einem Hebel (19) bedienbar ist.

## Claims

1. An outdoor wood stove device of the type comprising at least two superimposed compartments (10, 21), namely an upper cooking compartment (10) closed by a door (14) and a lower compartment (21) for the fire pit above which said upper compartment (10) is open, and designed in at least two superimposed and separable modules (1, 2), one (1), upper, including the cooking compartment (10), and the other (2), lower, including the compartment (21) intended to contain the fire pit, **characterized in that** the upper module (1) rests on the ground independently of the lower module (2), the latter also resting on the ground, and **in that** it includes actionable means (18), designed capable of moving at least one of said two modules (1, 2) in the vertical direction, so as to perform, in the direction of the movement, the adjustment of the joining of said modules (1, 2) or their separation, so as to allow, respectively, the tight butting of said modules (1, 2) or their separation.

2. The oven device according to claim 1, **characterized in that** at least one of the modules (1, 2) is equipped with rolling means (20) to allow it to be moved away from the other module.

3. The oven device according to claim 1 or claim 2, **characterized in that** the lower module (2) includes means capable of moving it vertically.

4. The oven device according to claim 1 or claim 2, **characterized in that** the cooking compartment (10) of the upper module (1) is designed capable of being raised relative to its part (11, 12) that rests on the ground.

5. The oven device according to claim 4, **characterized in that** the cooking compartment (10) is designed capable of pivoting along a horizontal axis (XX') situated at its base on the side opposite that including the door (14), while its part (11, 12) that rests on the ground is equipped with a lifting means (18) able to perform the pivoting.

6. The oven device according to claim 5, the lifting means consisting of a cam system (18), maneuverable by a lever (19).
